# EUROPÄISCHE PATENTSCHRIFT

(11) **EP 2 532 912 B1**
(45) Veröffentlichungstag und Bekanntmachung des Hinweises auf die Patenterteilung: **03.12.2014**
(21) Anmeldenummer: 12177934.2
(22) Anmeldetag: 27.10.2009
(51) Int. Cl.: F16D 25/0638, F16D 21/06

(54) **Doppelkupplungsanordnung für ein Doppelkupplungsgetriebe**
Double gear assembly for a double gear transmission
Dispositif à double embrayage pour un engrenage à double embrayage

(30) Priorität: 28.10.2008 DE 102008055681
(43) Veröffentlichungstag der Anmeldung: 12.12.2012
(62) Teilanmeldung aus: 09174110.8
(73) Patentinhaber: GETRAG Getriebe- und Zahnradfabrik Hermann Hagenmeyer GmbH & Cie KG, 74199 Untergruppenbach (DE)
(72) Erfinder: Gremplini, Hansi, 74379 Ingersheim (DE); Fronius, Kuno, 74348 Lauffen (DE)
(74) Vertreter: Witte, Weller & Partner Patentanwälte mbB

(56) Entgegenhaltungen:
- EP-A2- 1 764 523
- WO-A1-2006/048179
- DE-A1-102004 013 265
- DE-B4-102006 010 113
- US-B1- 6 378 675

## Beschreibung

Die vorliegende Erfindung betrifft ein Doppelkupplungsgetriebe mit einer Doppelkupplungsanordnung, wobei ein Nabenmantel besonders ausgebildet ist. Die vorliegende Erfindung betrifft ferner eine Doppelkupplungsanordnung für ein Doppelkupplungsgetriebe, bei der Eingangsglieder von Reibkupplungen besonders ausgebildet und angeordnet sind. Des Weiteren betrifft die vorliegende Erfindung ein Verfahren zum Einstellen eines Lüftspiels von Doppelkupplungsanordnungen in derartigen Doppelkupplungsgetrieben.

Aus der US 6,378,675 B1 ist eine Kupplungseinrichtung bekannt, die zur Verbindung des Antriebs eines Kraftfahrzeugs mit einem mehrstufigen Schaltgetriebe dient. Die Kupplungseinrichtung weist hierfür zwei Reibungskupplungen auf, die unabhängig voneinander ein- oder ausrückbar sind. Wenigstens eine der Reibungskupplungen ist an ihrer Antriebsseite jeweils mit einem Antriebsbauteil einer hydrodynamischen Kupplung in Wirkverbindung, die zur Übertragung eines durch den Antrieb eingeleiteten Drehmoments aktivierbar ist.

Eine Doppelkupplungsanordnung mit gehäusefesten Kolben/Zylinderanordnungen ist aus dem Dokument DE 10 2004 061 020 A1 bekannt.

Doppelkupplungsgetriebe weisen eine Doppelkupplungsanordnung sowie zwei Teilgetriebe auf. Die Teilgetriebe sind in der Regel in Vorgelegebauweise ausgeführt. Eines der Teilgetriebe ist dabei geraden Gangstufen zugeordnet, das andere Teilgetriebe ist ungeraden Gangstufen zugeordnet.

Durch überschneidende Betätigung der zwei Kupplungen der Doppelkupplungsanordnung kann ein Gangwechsel ohne Zugkraftunterbrechung durchgeführt werden.

Diese Art von Doppelkupplungsgetriebe eignet sich für Kraftfahrzeuge, insbesondere für Personenkraftwagen.

Bei den Doppelkupplungsanordnungen werden heutzutage in der Regel fluidisch betriebene (nasse) Reibkupplungen verwendet, beispielsweise nasslaufende Lamellenkupplungen.

Aus dem Dokument DE 10 2004 013 265 A1 ist eine Doppelkupplungsanordnung bekannt, bei der den zwei Reibkupplungen jeweils ein mitlaufender Betätigungskolben zugeordnet ist, und wobei die Betätigungskolben eine einen Druckbeaufschlagbaren Kolbenraum zugewandte erste radiale Wirkfläche und eine einem Fliehkraftdruckausgleichsraum zugewandte zweite radiale Wirkfläche aufweisen. Die Zufuhr von Fluid zu den Kolbenräumen erfolgt über eine mitdrehende Nabe und eine zwischen dieser Nabe und dem Gehäuse angeordneten Drehdurchführung. Nachteilig bei dieser Art von Doppelkupplungsanordnung ist die Tatsache, dass die Komplexität relativ groß ist und sich hohe Schleppmomente ergeben.

Eine vergleichbare Doppelkupplungsanordnung ist aus dem Dokument DE 102 23 780 C1 bekannt.

Das Dokument EP 1 568 906 A1 offenbarte eine Doppelkupplung mit zwei um eine gemeinsame Drehachse drehbar und axial hintereinander angeordneten Kupplungen. Die Kupplungen weisen einen gemeinsamen angetriebenen Außenlamellenträger und jeweils einen abtreibenden Innenlamellenträger auf. Es ist eine den Außenlamellenträger umgreifende Zughülse vorgesehen, über die eine der beiden Kupplungen betätigbar ist.

Ferner offenbart das Dokument DE 10 2004 055 361 A1 eine Doppelkupplungsanordnung mit zwei radial ineinander geschachtelten Reibkupplungen, die jeweils fluidisch betätigbar sind. Jeder Kupplung ist ein Fliehkraftausgleichsraum zugeordnet, die über eine gemeinsame Leitung mit einer Ventilanordnung verbunden sind.

Aus der eingangs genannten DE 10 2004 061 020 A1 ist bekannt, an einer gehäusefesten Nabe bei radial hintereinander verschachtelten, in die gleiche Richtung wirkenden Kolben/Zylinderanordnungen gehäusefest vorzusehen. Die Kolben/Zylinderanordnungen wirken über Hebelanordnungen auf die ebenfalls radial in einander geschachtelten Reibkupplungen der Doppelkupplungsanordnung. Ein Eingangsglied der radial äußeren Reibkupplung ist an einem Abschnitt der ersten Ausgangswelle (innere Ausgangswelle) drehbar gelagert, der sich in Richtung hin zu der Kolbenwelle erstreckt.

Insbesondere bei mitrotierenden Kolben/Zylinderanordnungen, die drehfest an einem Nabenmantel, d.h. nabenmantelfest, montiert sind, der wiederum drehbar gegenüber einer gehäusefesten Nabe gelagert ist, wird der Nabenmantel üblicherweise aus Stahl, zum Beispiel spanend, aus Vollmaterial herausgearbeitet. Stahl ist teuer. Die Bearbeitung ist aufwändig, zeit- und kostenintensiv. Das Gewicht des Stahlnabenmantels ist relativ groß, so dass bereits am Nabenmantel Schleppmomente auftreten können.

Des Weiteren ist die Einstellung des Lüftspiels (Abstand Kupplungsaktuator zu Kupplungskörper im geöffneten Zustand) ein zeitaufwändiges Unterfangen, da das Lüftspiel für jede Kupplungsanordnung bzw. für jede der Reibkupplungen individuell gemessen und eingestellt werden muss. Insbesondere bei der Verwendung von Lamellenkupplungen als Reibkupplung ist dies schwierig. Der Lamellenkupplungskörper besteht im Wesentlichen aus zwei Lamellenkämmen, die miteinander kämmen. Je nach Ausgestaltung und Anordnung der Lamellenträger variiert der Abstand zwischen Kupplungskörper und Kupplungsaktuator mehr oder weniger stark. Dieses Lüftspiel muss individuell eingestellt werden.

Im Stand der Technik ist es bekannt, ein oder mehrere zusätzliche (Lamellen-)Abschlussglieder einzusetzen, sollte sich nach einer Messung des Lüftspiels herausstellen, dass das Spiel zu groß ist. Dazu gibt es unterschiedlich dicke Lamellen. Einige Kupplungshersteller verwenden Baukastensysteme, die zum Beispiel acht verschiedene Lamellendicken aufweisen. Ein zwischen dem Kupplungsaktuator und einem Sicherungsring am Lamellenträger zur Verfügung stehende Raum wird vermessen. Anschließend wird errechnet, aus welchem Lamellentyp der Kupplungskörper aufzubauen ist. Anschließend wird der Lamellenkörper zusammengebaut und eingesetzt. Auch diese Vorgehensweise ist zeitaufwändig und für jede Kupplung erneut durchzuführen. Das Bauteilsortiment ist groß, da viele unterschiedliche Lamellentypen vorgehalten werden müssen.

Das Dokument DE 103 33 437 A1 offenbart ein Mehrstufen-Automatengetriebe mit drei Planetenradsätzen. Ein Mehrstufen-Automatengetriebe weist eine Antriebswelle, eine Abtriebswelle, drei nebeneinander in Reihe angeordnete Einzel-Planetenradsätze sowie fünf Schaltelemente auf. Ein Sonnenrad des dritten Radsatzes ist über das erste Schaltelement an einem Getriebegehäuse festsetzbar. Die Antriebswelle ist mit einem Sonnenrad des zweiten Radsatzes verbunden und über das zweite Schaltelement mit einem Sonnenrad des ersten Radsatzes und/oder über das fünfte Schaltelement mit einem Steg des ersten Radsatzes verbindbar. Alternativ ist das Sonnenrad des ersten Radsatzes über das dritte Schaltelement und/oder der Steg des ersten Radsatzes über das vierte Schaltelement an dem Getriebegehäuse festsetzbar. Die Abtriebswelle ist mit einem Hohlrad des ersten Radsatzes und einem der Stege des zweiten oder dritten Radsatzes verbunden. Das zweite und fünfte Schaltelement bilden eine Baugruppe mit je einem Lamellenpaket und je einer Servoeinrichtung, sowie einem für beide Schaltelemente gemeinsamen Lamellenträger. Das Lamellenpaket des zweiten Schaltelementes weist einen größeren Durchmesser auf als das Lamellenpaket des fünften Schaltelements.

Es ist vor dem obigen Hintergrund die Aufgabe der vorliegenden Erfindung, eine verbesserte Doppelkupplungsanordnung für ein Doppelkupplungsgetriebe anzugeben.

Die oben genannte Aufgabe wird durch eine Doppelkupplungsanordnung für ein Doppelkupplungsgetriebe gelöst, wobei die Doppelkupplungsanordnung eine Eingangswelle, eine erste Reibkupplung, eine zweite Reibkupplung, zwei Ausgangswellen, eine gehäusefeste Nabe, eine erste Kolben/Zylinderanordnung und eine zweite Kolben/Zylinderanordnung aufweist. Eingangsglieder der Reibkupplungen sind an die Eingangswelle gekoppelt. Ausgangsglieder der Reibkupplungen sind jeweils mit einer der Ausgangswellen verbunden. Die Reibkupplungen sind jeweils mittels einer der Kolben/ Zylinderanordnungen betätigbar. Ferner ist ein drehbar an der Nabe gelagerter Nabenmantel vorgesehen. Außerdem sind mindestens ein erstes, ein zweites und ein drittes Eingangsglied vorgesehen, wobei das erste Eingangsglied ein Außenglied der radial außen liegenden Reibkupplung trägt. Das zweite Eingangsglied ist drehfest an das erste Eingangsglied gekoppelt und trägt ein Innenglied der radial innen liegenden Reibkupplung. Das dritte Eingangsglied ist an seinem einen Ende an den Nabenmantel und an seinem anderen Ende eben mit dem zweiten Eingangsglied und außen mit dem ersten Eingangsglied drehfest verbunden.

Mit einer derartig aufgebauten Doppelkupplungsanordnung lassen sich das Lüftspiel sowohl der ersten als auch der zweiten Reibkupplung auf einfache Weise beim Zusammenbau der Doppelkupplung einstellen und festlegen. Insbesondere sind dazu keine weiteren Elemente erforderlich, wie es zum Beispiel durch die zusätzlichen Endlamellen im Falle einer Lamellenkupplung der Fall ist. Es müssen also keine zusätzlichen Lamellen(-Typen) vorgesehen werden, um das Lüftspiel einzustellen.

Ferner ist es bevorzugt, dass die Reibkupplungen Lamellenkupplungen sind.

Außerdem hat es sich als vorteilhaft herausgestellt, dass das erste und das zweite Eingangsglied jeweils derart ausgebildet sind, dass sie ein Gegenlager beim Betätigen der ihnen zugeordneten Reibkupplungen bilden.

Die Ausgestaltung der Eingangsglieder mit integriertem Gegenlager macht das Vorsehen von Gegenlagerringen an den Eingangsgliedern überflüssig. Die Gegenlagerringe mussten herkömmlicherweise am Eingangsglied montiert werden, nachdem das Lüftspiel gemessen war. All diese Arbeitsschritte entfallen jetzt.

Bei einer weiteren besonderen Ausgestaltung weist das Eingangsglied der äußeren Reibkupplung eine Außenverzahnung zum Einstecken in eine Innenverzahnung der Eingangswelle auf, wobei die Eingangswelle vorzugsweise außen ein Radiallager und eine Wellendichtung trägt.

Im eingangsseitigen Bereich der Doppelkupplung kann so in radialer Richtung Bauraum eingespart werden.

Ferner wird die obige Aufgabe durch ein Verfahren zum Einstellen eines Lüftspiels in einer Doppelkupplungsanordnung gemäß einem der vorhergehenden Ansprüche gelöst, wobei das einer jeweiligen der Reibkupplungen zugeordnete Eingangsglied derart ausgebildet ist, dass es ein Gegenlager für die zugeordnete Reibkupplung bildet. Das Verfahren weist die folgenden Schritte auf: Fixieren eines der Eingangsglieder relativ zur Nabe; drehfestes Montieren der Kolben/Zylinderanordnung an der Nabe oder am Nabenmantel; Einstellen eines gewünschten Kupplungsspiels durch axiales Bewegen des Eingangsglieds an dem Eingangsglied, welches relativ zur Nabe fixiert wurde, wenn das gewünschte Spiel eingestellt ist.

Anstatt auf aufwändige Weise, wie im Stand der Technik üblich, zusätzliche Lamellenglieder in den Kupplungskörper einzubauen, um das Lüftspiel zu korrigieren, lässt sich das Lüftspiel gemäß der vorliegenden Erfindung durch einfaches axiales Bewegen des Eingangsglieds ändern, dessen Lüftspiel eingestellt werden soll. Anschließend wird dieses Eingangsglied fixiert und die (Vor-)Montage der Doppelkupplungsanordnung wird fortgesetzt.

Die Doppelkupplungsanordnung wird also wie üblich schrittweise radial von innen nach außen aufgebaut. Das Eingangsglied, das mit der Reibkupplung verbunden ist, deren Lüftspiel eingestellt werden soll, wird wie beim normalen Aufbau üblich, einfach an der dafür vorgesehenen Stelle fixiert, wobei zur Variation des Lüftspiels dessen Eingangsglied in axialer Richtung vorher bewegt wird. Das Messen des Lüftspiels und das axiale Bewegen kann simultan erfolgen, so dass beim Aufbau der Doppelkupplung nahezu keine Zeit für das Einstellen des Lüftspiels verloren geht. Weniger Bauteil müssen vorgehalten werden. Die zusätzlichen Lamellen entfallen beispielsweise.

Gemäß einer besonderen Ausgestaltung werden insbesondere die folgenden Schritte durchgeführt: Fixieren des dritten Eingangsglieds relativ zur Nabe; Montieren der Kolben/Zylinderanordnung, die der außen liegenden Reibkupplung zugeordnet ist; Einbauen des zweiten Eingangsglieds mit zugeordnetem Reibkupplungskörper; Montieren der Kolben/Zylinderanordnung, die der innen liegenden Reibkupplung zugeordnet ist; wahlweises Einstellen des Kupplungsspiels der inneren Reibkupplung durch axiales Verschieben des zweiten Eingangsglieds; Fixieren des zweiten Eingangsglieds am dritten Eingangsglied; Einbauen des Ausgangsglieds der inneren Reibkupplung; Einbauen des Ausgangsglieds der äußeren Reibkupplung inklusive des Reibkupplungskörpers der äußeren Reibkupplung; wahlweises Einstellen des Kupplungsspiels der äußeren Reibkupplung durch axiales Verschieben des dritten Eingangsglieds; und Fixieren des ersten Eingangsglieds am dritten Eingangsglied.

Durch das Vorsehen von drei Eingangsgliedern, von denen die zwei, direkt den Reibkupplungen zugeordneten Eingangsglieder Abschnitte aufweisen, die als Gegenlager für den Kupplungskörper ausgebildet sind, können beide oder auch nur eines der Lüftspiele beim Aufbau der Doppelkupplungsanordnung auf einfache Weise und schnell eingestellt werden. Der Aufbau bzw. Zusammenbau der Doppelkupplung kann simultan zum Messen des Lüftspiels erfolgen, so dass man sich viel Zeit beim Zusammenbauen der Doppelkupplung sparen kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine teilweise geschnittene Seitenansicht auf eine Doppelkupplungsanordnung mit einem Nabenmantel gemäß der vorliegenden Erfindung;
- Fig. 2: eine Doppelkupplungsanordnung ähnlich der Fig. 1, wobei das Eingangsglied mehrteilig zum Einstellen des Lüftspiels gemäß der vorliegenden Erfindung aufgebaut ist;
- Fig. 3: eine Detailansicht einer Verbindung zwischen einer Eingangswelle und einem ersten Eingangsglied; und
- Fig. 4: ein Flussdiagramm des Verfahrens gemäß der vorliegenden Erfindung.

In der nachfolgenden Beschreibung der Figuren werden ähnliche Merkmale mit den gleichen Bezugszeichen versehen. Sollten gravierende Unterschiede zwischen einzelnen Merkmalen vorhanden sein, wird explizit hingewiesen werden.

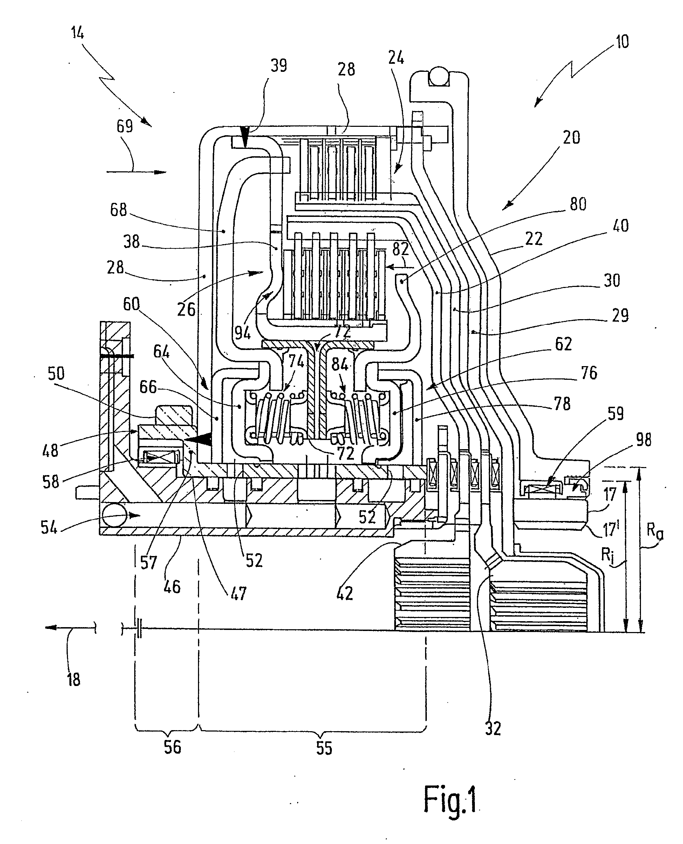

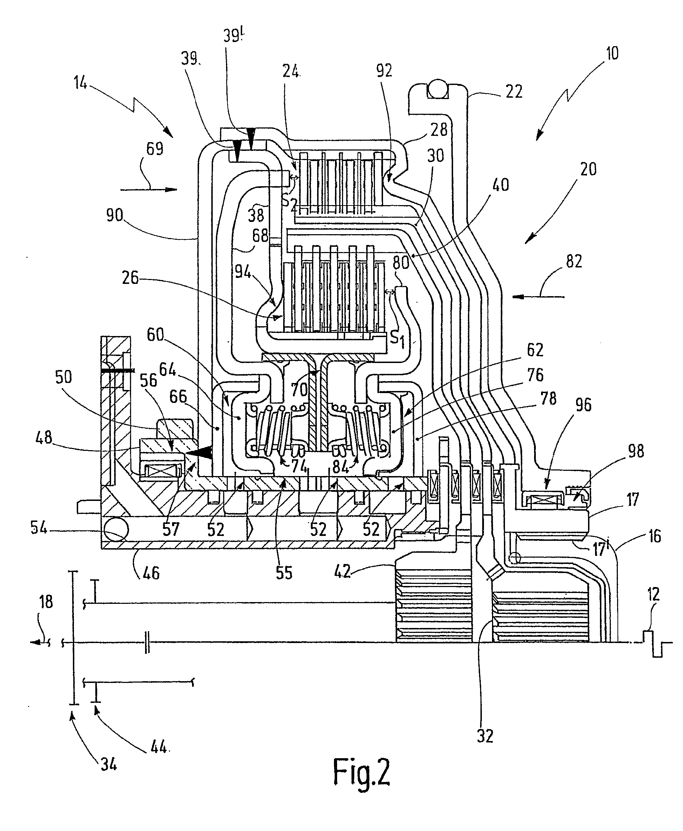

Ein Antriebsstrang 10 mit einem Antriebsmotor 12 (vg. Fig. 2), wie zum Beispiel ein Verbrennungsmotor, ist explizit in der Fig. 1 nicht gezeigt, aber trotzdem als vorhanden anzusehen. Der Antriebsstrang 10 weist ferner ein Doppelkupplungsgetriebe 14 auf, dessen Eingang mit einer Kurbelwelle 16 (vgl. Fig. 2) des Verbrennungsmotors 12 verbunden ist. Das Doppelkupplungsgetriebe 14 weist eine Abtriebswelle 18 auf, die in an sich bekannter Weise mit Antriebsrädern des Fahrzeugs verbunden werden kann.

Das Doppelkupplungsgetriebe 14 weist eine Doppelkupplungsanordnung 20 auf, die in einem Gehäuse aufgenommen ist. In Fig. 1 ist lediglich ein Kupplungsdeckel 22 als Teil des Gehäuses gezeigt.

Die Doppelkupplungsanordnung 20 beinhaltet eine erste Reibkupplung 24 und eine zweite Reibkupplung 26. Die zwei Reibkupplungen 24, 26 sind radial ineinander verschachtelt angeordnet, wobei die erste Reibkupplung 24 radial außen liegt.

Die erste Reibkupplung 24 weist ein erstes Eingangsglied 28 auf, das an den Eingang, d.h. an die Kurbelwelle 16, gekoppelt ist. Dazu ist das erste Eingangsglied 28 drehfest mit einer Mitnehmerscheibe 29 verbunden. Die Mitnehmerscheibe 29, die sich im Wesentlichen in radialer Richtung erstreckt, weist in axialer Richtung einen Mitnehmervorsprung bzw. -ring 17 mit einer Innenverzahnung 17' auf. Mit Hilfe der Innenverzahnung 17' kann die Mitnehmerscheibe 29 an die Kurbelwelle 16 (in Fig. 1 nicht dargestellt) koppeln, die wiederum eine hier nicht dargestellte Außenverzahnung aufweist. Die axiale Länge des Rings 17 ist so gewählt, dass das Wellendichtlager 98 und das Radiallager 59 (bzw. 96 in Fig. 2) außenseitig am Ring 17 angebracht werden können, wobei die Länge der Innenverzahnung entsprechend gewählt ist. Der Ring 17 baut viel kürzer als im Stand der Technik.

Das erste Eingangsglied 28 erstreckt sich nach Art eines Korbes axial. Die zwei Reibkupplungen 24, 26 sind radial innerhalb des ersten Eingangsglieds 28 angeordnet.

Die erste Reibkupplung 24 weist ferner ein erstes Ausgangsglied 30 auf. Das erste Ausgangsglied 30 ist mit einer ersten Ausgangswelle 32 der Doppelkupplungsanordnung verbunden. Die Ausgangswelle 32 ist als Vollwelle ausgebildet und ist mit einem ersten Teilgetriebe 34 (vgl. auch Fig. 2) des Doppelkupplungsgetriebes 14 verbunden.

Das erste Ausgangsglied 30 ist ebenfalls nach der Art eines Korbs ausgebildet und erstreckt sich radial innerhalb des ersten Eingangsglieds 28, wobei die erste Reibkupplung 24 dazwischen aufgenommen ist.

Die zweite Reibkupplung 26 weist ein zweites Eingangsglied 38 auf. Das zweite Eingangsglied 38 ist drehfest mit dem ersten Eingangsglied 28 verbunden, wie es hier durch eine dreieckig dargestellte Schweißverbindung 39 exemplarisch gezeigt ist. Die zweite Reibkupplung 26 weist ferner ein zweites Ausgangsglied 40 auf. Das zweite Ausgangsglied ist ebenfalls nach Art eines Korbes ausgebildet und erstreckt sich radial innerhalb des ersten Ausgangsglieds 30. Das zweite Ausgangsglied 40 ist mit einer zweiten Ausgangswelle 42 verbunden, die als Hohlwelle konzentrisch zu der ersten Ausgangswelle 32 angeordnet ist. Die zweite Ausgangswelle 42 ist mit einem zweiten Teilgetriebe 44 (vgl. Fig. 2) des Doppelkupplungsgetriebes 14 verbunden. Das erste Eingangsglied 28 inklusive der Mitnehmerscheibe 29, das erste Ausgangsglied 30 und das zweite Ausgangsglied 40 erstrecken sich, wie oben erwähnt, nach der Art von Körben ausgehend von dem Bereich der Kurbelwelle 16 in Richtung hin zu den Teilgetrieben 34, 44 bzw. zur Abtriebswelle 18. Zum anderen weist die Doppelkupplungsanordnung 20 eine gehäusefeste Nabe 46 auf, die sich in axialer Richtung von dem Bereich der Teilgetriebe 34, 44 in Richtung hin zu dem Bereich der Kurbelwelle 16 erstreckt. Die Nabe 46 weist im Bereich der Doppelkupplungsanordnung 20 eine im Wesentlichen zylindrische Form auf. Die gehäusefeste Nabe 46 ist dabei koaxial zu den zwei Ausgangswellen 32, 42 angeordnet und umgibt diese hier.

Zwischen einer Stirnseite der gehäusefesten Nabe 46 und radialen Abschnitten der Ausgangsglieder 30, 40 und einem radialen Abschnitt der Mitnehmerscheibe 29 sind hier nicht näher bezeichnete Axiallager vorgesehen. Diese Axiallager sind in radialer Richtung mit einem drehbar zur Nabe 46 gelagerten Nabenmantel 48 ausgerichtet.

Der Nabenmantel 48 ist im Bereich der Doppelkupplungsanordnung 14 zylindrisch ausgebildet und koaxial zu den Ausgangswellen 32, 42 angeordnet.

Der Nabenmantel 48 ist hier aus vorzugsweise aus 3 - 5 mm starkem Blech geformt. Im Stand der Technik werden Nabenmäntel aus Stahl mit spanender Bearbeitung hergestellt, wobei die herkömmlichen Nabenmäntel von einem gleichförmigen Zylinderquerschnitt abweichende Querschnitte (mit variierendem Radius) aufweisen, um unterschiedlichste Kupplungselemente (z.B. Lager, Aktuatoren, usw.) bei unterschiedlichen radialen Abständen aufnehmen zu können. Der Nabenmantel 48 gemäß der vorliegenden Erfindung weist - zumindest im Bereich der Doppelkupplungsanordnung 14, die im Wesentlichen vom Eingangsglied 28 und der Mitnehmerscheibe 29 umschlossen wird - einen konstanten Innenradius Ri und einen konstanten Außenradius Ra auf.

Der Nabenmantel 48 kann ferner eine, vorzugsweise einstückig ausgebildete, Verzahnung 50 an seinem der Abtriebswelle 18 gegenüberliegenden Ende aufweisen. Diese Verzahnung 50 kann mit einer entsprechenden Verzahnung z.B. einer hier nicht dargestellten Hydraulikpumpe 50 kämmen, um Fluide, die zum Betätigen und/oder Schmieren der Doppelkupplungsanordnung 14 benötigt werden, durch einzelne Öffnungen 52 im Nabenmantel 48 zu führen. Die Öffnungen 52, von denen in der Fig. 1 drei gezeigt sind, können zum Beispiel gebohrt oder gestanzt werden. Die Öffnungen 52 stehen fluidmäßig mit einem zentralen Kanal 54 und umlaufend vorgesehenen Nuten in der Nabe 46 in Verbindung. Das Fluid wird durch die Nabe 46 in die Doppelkupplungsanordnung 14 durch die Öffnungen 52 geleitet. Die Öffnungen 52 befinden sich hier in einem ersten Axialabschnitt 55 des Nabenmantels 48, an dem eine Vielzahl der relevanten Elemente der Doppelkupplungsanordnung 14 bei gleichbleibendem (Nabenmantel-)Radius montiert sind. An den ersten Axialabschnitt 55 schließt sich ein zweiter Axialabschnitt 56 auf. Der zweite Axialabschnitt 56 ist über einen Radialabschnitt 57 mit dem ersten Axialabschnitt 55 verbunden. Der Radius des zweiten Axialabschnitts 56 ist hier größer als der Radius des ersten Axialabschnitts 55, um ein Radiallager 58 zwischen dem Nabenmantel 48 und der Nabe 46 aufnehmen zu können. Die Komponenten 590, 55 -57 sind hier einstückig ausgebildet. Die Pumpenverzahnung kann aufrolliert bzw. aufgeprägt werden.

Mit Hilfe des Radiallagers 58 stützt sich die Doppelkupplungsanordnung 14 im Wesentlichen an der Nabe 46 ab. Ein zweites Radiallager 59 ist auf der gegenüberliegenden Seite im Bereich des gehäusefesten Kupplungsdeckels 22 angeordnet. Auf diese Weise können eine Vielzahl der Elemente der Doppelkupplungsanordnung 20 rotierend um die Nabe 46 gehalten werden.

Das erste Eingangsglied 28 ist an seinem der Eingangswelle 16 abgewandten Seite hier ebenfalls mittels einer exemplarischen Schweißverbindung mit dem Radialabschnitt 57 des Nabenmantels 48 (axial) verbunden. Alternativ und ergänzend könnte das erste Eingangsglied 28 aber auch mit dem ersten Axialabschnitt 55 verbunden sein.

Es versteht sich, dass der Nabenmantel 48 auch einen konstanten, einzigen Radius (Ri und Ra) aufweisen könnte, so dass die Axialabschnitte 55, 56 eins wären, d.h. ohne den Radialabschnitt 57 vorgesehen wären. Das Radiallager 58 könnte dazu in einer entsprechend ausgebildeten Ausnehmung in der Nabe 46 vorgesehen werden.

Ein großer Vorteil des Nabenmantels 48 ist, dass er aus einem relativ kostengünstigen Material, z.B. 3 mm starken Blech o.Ä., mittels Umformvorgängen hergestellt werden kann. Da der Nabenmantel 48 einen nahezu konstanten Radius aufweist, können viele gleiche Bauteile, insbesondere mit gleichen Durchgangsöffnungsradien, verwendet werden. Derartige Teile werden nachfolgend erläutert.

Zur Lagerung des zweiten Eingangsglieds 38, und damit mittelbar auch des ersten Eingangsglieds 28, ist das Radiallager 58 vorgesehen. Obgleich das Radiallager 58 im Wesentlichen Radialkräfte aufnimmt, kann es auch zur Aufnahme von Axialkräften ausgelegt sein.

Zum Betätigen der zwei Reibkupplungen 24, 26 sind eine erste Kolben/Zylinderanordnung 60 und eine zweite Kolben/Zylinderanordnung 62 vorgesehen. Die Kolben/Zylinderanordnungen 60, 62 sind auf sich gegenüberliegenden Seiten bei einem gleichen Radius (relativ zur gemeinsamen Drehachse des Gesamtsystems) angeordnet.

Die erste Kolben/Zylinderanordnung 60 weist einen ersten Kolben 64 auf, der in axialer Richtung in dem ersten Zylinder 66 verschieblich gelagert ist. Ein hierdurch gebildeter Zylinderraum ist über eine der Radialöffnungen 52 im Nabenmantel 48 mit der Zuführleitung 54 innerhalb der gehäusefesten Nabe 46 verbunden.

Die Außenseite des ersten Kolbens 64 ist an eine erste Druckplatte 68 gekoppelt. Die erste Druckplatte 68 erstreckt sich radial nach außen und weist axiale Abschnitte auf. Ein radial außen liegender Axialabschnitt der Druckplatte 68 ist dazu ausgelegt, die erste Reibkupplung 24 axial mit einer Kraft (vgl. Pfeil 69) zu beaufschlagen, um die Reibkupplung 24 zu schließen, die in der Fig. 1 in einem geöffneten Zustand gezeigt ist.

Die erste Druckplatte 68 dreht sich mit dem ersten und dem zweiten Eingangsglied 28, 38 mit. Die Druckplatte 68 dreht sich auch mit dem nabenmantelfesten Kolben 64 bzw. dem nabenmantelfesten Zylinder 66 mit.

Der obere Axialabschnitt der ersten Druckplatte 68, der an Lamellen der ersten Reibkupplung 24 anstoßen kann, erstreckt sich durch eine hier nicht näher gezeigte Öffnung in einem Radialabschnitt des zweiten Eingangsglieds 38 hindurch. Bei einem konstruktiv realisierten Ausführungsbeispiel wird in der Regel eine Mehrzahl solcher Öffnungen vorgesehen sein, die über den Umfang der ersten Druckplatte 68 verteilt angeordnet sind.

Auf einer der ersten Kolben/Zylinderanordnung 60 gegenüberliegenden Seite ist ein T-förmiges Drehglied 70 mit innerem Kanal 72 zur Versorgung mit Fluid vorgesehen. Zwischen dem Kolben 64 und der linken Seite des Drehglieds 70 ist eine erste Federanordnung 74 vorgesehen, um die erste Druckplatte 68 in eine geöffnete Stellung vorzuspannen. Die erste Federanordnung 74 stützt sich dazu an einem Radialsteg des Drehglieds 70 ab und drückt den Kolben 64, und damit auch die erste Druckplatte 68, in axialer Richtung von dem Radialabschnitt weg, hin in Richtung zu den hier nicht dargestellten Teilgetrieben 34, 44 (vgl. Fig. 2). Zum Betätigen der ersten Reibkupplung 24 wird der ersten Kolben/Zylinderanordnung 60 Hydraulikfluid zugeführt, so dass der erste Kolben 64 in die entgegengesetzte Richtung bewegt wird und folglich über die erste Druckplatte 68 eine Axialkraft auf das Lamellenpaket der ersten Reibkupplung 24 ausübt.

Die zweite Kolben/Zylinderanordnung 62 ist in entsprechender Weise, vorzugsweise aus gleichen Bauteilen, etwa spiegelbildlich hierzu aufgebaut. Die erste und die zweite Kolben/Zylinderanordnung 60, 62 können folglich mit ähnlichen oder identischen Bauteilen realisiert werden, insbesondere mit gleichem Durchgangsöffnungsradius, so dass sich eine hohe Modularität und eine geringe Vielfalt ergibt.

Die zweite Kolben/Zylinderanordnung 62 weist demzufolge einen zweiten Zylinder 78 auf, der drehfest mit dem Nabenmantel 46 verbunden ist, und zwar im Wesentlichen benachbart zu dem zweiten Ausgangsglied 40.

Die zweite Kolben/Zylinderanordnung 82 weist ferner einen zweiten Kolben 76 auf, der auf eine zweite Druckplatte 80 wirkt. Ein radialer Abschnitt der zweiten Druckplatte 80 liegt an einem Lamellenpaket der zweiten, radial innen liegenden Reibkupplung 26 an. Die zweite Kolben/Zylinderanordnung 62 kann folglich eine zweite Axialkraft (vgl. Pfeil 82) auf die zweite Reibkupplung 26 ausüben, wobei die zweite Axialkraft entgegengesetzt zu der ersten Axialkraft ausgerichtet ist.

Zwischen einem weiteren Radialabschnitt des Drehglieds 70 und dem Kolben 78 der zweiten Kolben/Zylinderanordnung 62 ist eine zweite Federanordnung 84 vorgesehen, die den Kolben 78, und somit auch die zweite Druckplatte 80, hin zur Eingangswelle 16 vorspannt.

Der Zylinderraum der zweiten Kolben/Zylinderanordnung 62 ist über die Radialöffnung 52 (ganz rechts) im Nabenmantel 48 mit dem Kanal 54 in der Nabe 46 verbunden. Es versteht sich, dass eine hier nicht näher dargestellte Hydraulikschaltung auch Kanäle aufweist, über die den Reibkupplungen 24, 26 Kühlfluid zugeführt werden kann.

Das Kühlfluid wird dabei über Kanäle in der gehäusefesten Nabe 46, u.A. einem Raum im Bereich des Drehglieds 70 und den Radialkanäle 72 im Drehglied 70 und den Reibkupplungen 24, 26 zugeführt. Es versteht sich, dass in den Eingangs- und Ausgangsgliedern 38, 30, 40 jeweils geeignete Radialöffnungen vorgesehen sind, um für eine geeignete Beströmung der Lamellen zu sorgen.

Während in Fig. 1 die Reibkupplungen 24, 26 als nasslaufende Lamellenkupplungen dargestellt sind, versteht es sich, dass der Aufbau der erfindungsgemäßen Doppelkupplungsanordnung 20 auch für trockenlaufende Reibkupplungen verwendbar ist. In diesem Fall könnte beispielsweise über Kanäle, die bei nasslaufenden Kupplungen zur Kühlölzufuhr verwendet werden, Kühlluft zugeführt werden.

Insgesamt lässt sich somit ein modulares System von Doppelkupplungsanordnungen aufbauen, die mit nasslaufenden oder trockenlaufenden Reibkupplungen ausgestattet sind. Der grundlegende Aufbau kann dabei für die eine wie die andere Variante verwendet werden.

Bezug nehmend auf Fig. 2 ist eine weitere Doppelkupplungsanordnung 20 gezeigt, die eine separate Erfindung widerspiegelt. In der Fig. 2 sind auch der Verbrennungsmotor 12, die Eingangswelle (Kurbelwelle) 16 sowie die Teilgetriebe 34, 44 gezeigt.

Mit Ausnahme der Eingangsglieder ist die Doppelkupplungsanordnung 20 der Fig. 1 identisch zur Doppelkupplungsanordnung der Fig. 1 aufgebaut.

Bei der Doppelkupplungsanordnung 20 gemäß Fig. 2 sind drei Eingangsglieder 28, 38 und 90 vorgesehen.

Das erste Eingangsglied 28 ist hier durchgehend ausgebildet, so dass auf die Mitnehmerscheibe 29 der Fig. 1 verzichtet werden kann. Das erste Eingangsglied 28 ist mittels einer exemplarischen Schweißverbindung 39' mit dem dritten Eingangsglied 90 verbunden, das wiederum über eine exemplarische Schweißverbindung mit dem Gehäusemantel 48 verbunden ist. Das dritte Eingangsglied 90 ist ferner mittels einer exemplarischen Schweißverbindung 39 mit dem zweiten Eingangsglied 38 verbunden.

Sowohl das erste Eingangsglied 28 als auch das zweite Eingangsglied 38 weisen im Bereich der Lamellenkupplungspakete knieförmige Ausbuchtungen in Richtung der Kupplungskörper auf. Diese knieförmigen Ausbuchtungen dienen als Gegenlager 92 bzw. 94 beim Betätigen der ersten Reibkupplung 24 bzw. der zweiten Reibkupplung 26. Halteringe oder ähnliches, wie sie aus dem Stand der Technik bekannt sind, sind zum Fixieren der Reibkupplungskörper am Lamellenträger nicht erforderlich.

Zwischen dem Kupplungskörper der zweiten Reibkupplung 26 und der zweiten Druckplatte 80 ist ein Lüftspiel s1 definiert. Zwischen dem Kupplungskörper der ersten, radial außenliegenden Reibkupplung 26 und der ersten Druckplatte 68 ist ein weiteres Lüftspiel s2 definiert. Mit Hilfe der Lüftspiele s1, s2 lässt sich die Kraft (vgl. Pfeile 69, 82) einstellen, mit der die Reibkupplungen 24, 26 geschlossen werden. Das Einstellen dieser Kräfte erfordert im Stand der Technik eine Individualvermessung der daran beteiligten Komponenten.

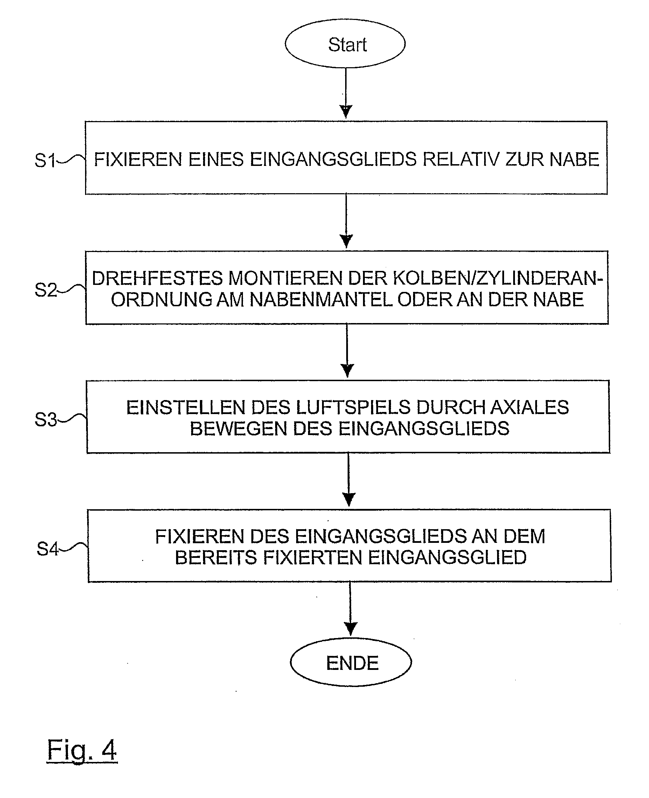

Indem bei der vorliegende Erfindung drei Eingangsglieder 28, 38, 90 vorgesehen werden, lässt sich bei der Montage der Doppelkupplungsanordnung 20 selbst das Lüftspiel s1, s2 jeder Reibkupplung 24, 26 auf einfache Weise einstellen, wie es auch im Zusammenhang mit dem Flussdiagramm der Fig. 4 noch näher erläutert werden wird. Die Doppelkupplungsanordnung 20 wird von radial innen in axialer Richtung (von links nach rechts in Fig. 2) radial nach außen (nach oben in Fig. 2) (vor-)montiert.

Als erstes der Eingangsglieder wird das dritte Eingangsglied 90 am Nabenmantel 48 fixiert. Dieses dritte Eingangsglied 90 dient als Referenzglied für die beiden anderen Eingangsglieder 28 und 38.

Nachdem das dritte Eingangsglied 90 am Mantel 48 fixiert ist, wird die erste Kolben/Zylinderanordnung 60 nabenmantelfest montiert. Anschließend wird die erste Druckplatte 68 eingebaut. Dann folgt das Drehlager 70 mit zumindest der ersten Federanordnung 74. Anschließend wird das zweite Eingangsglied 38 inklusive der Innenlamellen der zweiten Reibkupplung 26 eingebaut. Das zweite Eingangsglied 38 dient als Innenlamellenträger der zweiten Reibkupplung 26.

Dann wird die zweite Federanordnung 84 und die zweite Kolben/Zylinderanordnung 62 inklusive der zweiten Druckplatte 80 eingebaut. Das zweite Eingangsglied 38 ist währenddessen in axialer Richtung noch frei gegenüber dem dritten Eingangsglied 90 beweglich, so dass das Lüftspiel s1 der zweiten Reibkupplung 26 beliebig eingestellt werden kann. Sobald das Lüftspiel s1 eingestellt ist, kann das zweite Eingangsglied 38 am dritten Eingangsglied 90 zum Beispiel mit einer Schweißverbindung 39 fixiert werden.

Danach wird das zweite Ausgangsglied 40, das erste Ausgangsglied 30 mit den Innenlamellen der ersten Reibkupplung 24 und das erste Eingangsglied 28 mit den Außenlamellen der ersten Reibkupplung 24 montiert. Das erste Eingangsglied 28 ist zu diesem Zeitpunkt relativ zum dritten Eingangsglied 90 noch frei axial (und auch radial) beweglich. Danach wird das Lüftspiel s2 der ersten Reibkupplung 24 eingestellt. Dazu kann der Lamellenkörper der ersten Reibkupplung 24 in einem ersten Schritt in Anschlag an die erste Druckplatte 68 gebracht werden, wobei man einen Referenzpunkt am dritten Eingangsglied 90 definiert und dann das erste Eingangsglied 28 in das Lüftspiel s2 über dem dritten Eingangsglied 90 axial nach vorn (auch in Richtung des Motors 12) bewegt. Danach kann das erste Eingangsglied 28 mit dem dritten Eingangsglied 39 zum Beispiel verschweißt werden, um die Elemente gegeneinander zu fixieren.

Vorteil dieser Vorgehensweise ist, dass man während des Montierens der Doppelkupplungsanordnung 20 selbst eines oder beide Lüftspiele s1, s2 auf einfache Weise einstellen kann, ohne weitere Lamellen einbauen zu müssen oder sonstige Vorkehrungen treffen zu müssen.

Es versteht sich, dass die Doppelkupplungsanordnung 20 der Fig. 2 auch mit gehäusefesten Kolben/Zylinderanordnungen 60, 62 gebaut werden könnte. Die Kolben/Zylinderanordnungen 60, 62 würden dann direkt auf der Nabe 46 montiert werden, wobei dann zusätzliche Radiallager im Bereich des Drehglieds 70 erforderlich sein können, wie es in der DE 10 2006 010 113 B4 gezeigt ist, auf die hinsichtlich des Aufbaus einer Doppelkupplungsanordnung mit drehfesten Kolben/Zylinderanordnungen Bezug genommen wird. Das dritte Eingangsglied 90 wäre dann z.B. so zu formen, dass es, in axialer Richtung vorzugsweise unveränderlich, an einem geeignet aufgebauten Radiallager anliegt. Das dritte Eingangsglied würde dann zum Beispiel grob einen S-förmigen Querschnitt aufweisen, wobei ein oberer, radial außen liegender Axialabschnitt zur Verbindung mit dem ersten Eingangsglied 28 und dem zweiten Eingangsglied 38 dient und ein hinterer, radial innen liegender Axialabschnitt mit dem entsprechend ausgebildeten Radiallager zusammenwirkt. Dieses Radiallager würde insbesondere Axialkräfte aufnehmen können.

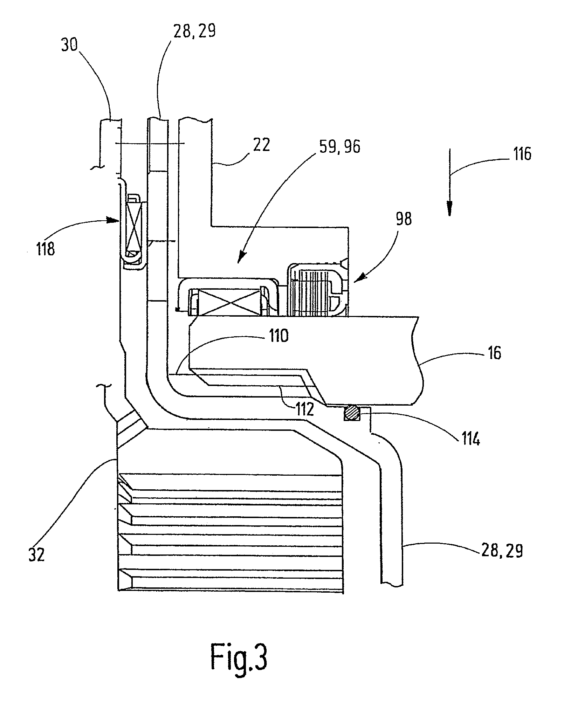

Bezug nehmend auf Fig. 3 ist eine Abwandlung der Ankopplung des Eingangsglieds 28 (vgl. Fig. 2) bzw. der Mitnehmerscheibe 29 (vgl. Fig. 1) an die Eingangswelle 16 gezeigt. Anstatt des Mitnehmervorsprungs 17 wird das erste Eingangsglied 28 bzw. die Mitnehmerscheibe 29 im Bereich der Eingangswelle 16 mit einer Außenverzahnung 110 versehen. Die Eingangswelle 16 weist dann eine Innenverzahnung 112 auf, die mit der Außenverzahnung 110 kämmt. Das Eingangsglied 28 bzw. die Mitnehmerscheibe 29 kann mit Hilfe einer Dichtung 114 gegenüber der Eingangswelle 16 abgedichtet werden.

Die Eingangswelle 16 trägt dann das Radiallager 59 (vgl. Fig. 1) bzw. das Radiallager 69 (vgl. Fig. 2) sowie eine Wellendichtung 98.

Vorteil dieser Bauweise ist, dass die Doppelkupplungsanordnung 20 im Bereich der Eingangswelle 16 in radialer Richtung 116 bedeutend platzsparender als herkömmliche Lösungen baut. Ferner ist eines der Axiallager 118 gezeigt (vgl. Fig. 1 und 2).

Fig. 4 offenbart das erfindungsgemäße Verfahren zum Einstellen von Lüftspielen s1 und/oder s2, insbesondere bei der Doppelkupplungsanordnung gemäß Fig. 2.

In einem ersten Schritt S1 wird eines der Eingangsglieder, vorzugsweise das dritte Eingangsglied 90, drehbar relativ zur Nabe 46, zum Beispiel am Nabenmantel 48, fixiert.

In einem zweiten Schritt S2 wird die Kolben/Zylinderanordnung der Reibkupplung drehfest am Nabenmantel 48 oder der Nabe 46 montiert, deren Lüftspiel einzustellen ist.

Danach wird in einem Schritt S3 das gewünschte Lüftspiel s1 und/oder s2 durch Bewegen des zugeordneten Eingangsglieds 38 bzw. 28 in axialer Richtung eingestellt. Wenn das Lüftspiel s1 und/oder s2 eingestellt ist, wird das entsprechende Eingangsglied 38 und/oder 28 am bereits fixierten Eingangsglied, vorzugsweise am dritten Eingangsglied 90, fixiert (vgl. Schritt S4).

## Patentansprüche

1. Doppelkupplungsgetriebe aufweisend eine Doppelkupplungsanordnung (20) mit einer Eingangswelle (16), einer ersten Reibkupplung (24), einer zweiten Reibkupplung (26), zwei sich axial erstreckenden Ausgangswellen (32, 42), die mit einem ersten und zweiten Teilgetriebe (34, 44) des Doppelkupplungsgetriebes verbunden sind, einer gehäusefesten Nabe (46), einer ersten Kolben/Zylinderanordnung (60) und einer zweiten Kolben/Zylinderanordnung (62), wobei Eingangsglieder (28, 38, 90) der Reibkupplungen (24, 26) an die Eingangswelle (16) gekoppelt sind, wobei Ausgangsglieder (30, 40) der Reibkupplungen (24, 26) jeweils mit einer der Ausgangswellen (32, 42) verbunden sind, wobei die Reibkupplungen (24, 26) jeweils mittels einer der Kolben/Zylinderanordnungen (60, 62) betätigbar sind, und mit einem drehbar an der Nabe gelagerten Nabenmantel (48), wobei mindestens ein erstes, ein zweites und ein drittes Eingangsglied (28, 38, 90) vorgesehen sind, wobei das erste Eingangsglied (28) ein Außenglied der radial außen liegenden Reibkupplung (24) trägt, wobei das zweite Eingangsglied (38) drehfest an das erste Eingangsglied (28) koppelt und ein Innenglied der radial innen liegenden Reibkupplung (26) trägt, **dadurch gekennzeichnet, dass** das dritte Eingangsglied (90) an seinem einen Ende an den Nabenmantel (48) koppelt und an seinem anderen Ende radial innen mit dem zweiten Eingangsglied (38) und radial außen mit dem ersten Eingangsglied (28) drehfest verbunden ist.

2. Doppelkupplungsgetriebe nach Anspruch 1, wobei die Reibkupplungen (24, 26) Lamellenkupplungen sind.

3. Doppelkupplungsgetriebe nach Anspruch 1 oder 2, wobei das erste und das zweite Eingangsglied (28, 38) jeweils derart ausgebildet sind, dass sie ein Gegenlager (92, 94) beim Betätigen der ihnen zugeordneten Reibkupplung (24, 26) bilden.

4. Doppelkupplungsgetriebe nach einem der vorhergehenden Ansprüche, wobei das Eingangsglied (28, 29), das an die Eingangswelle (16) koppelt, einen Mitnehmerring (17) aufweist, dessen axiale Länge so gewählt ist, das der Mitnehmerring (17) an seiner radialen Außenseite eine Wellendichtung (94) und ein Radiallager (59; 96) und an seiner radialen Innenseite eine Innenverzahnung (17') zum Koppeln an eine Außenverzahnung der Eingangswelle (16) aufweist.

5. Doppelkupplungsgetriebe nach einem der vorhergehenden Ansprüche, wobei das Eingangsglied (28) der äußeren Reibkupplung (24) eine Außenverzahnung zum Einstecken in eine Innenverzahnung der Eingangswelle (16) aufweist, wobei die Eingangswelle (16) außen ein Radiallager (59; 96) und eine Wellendichtung (98) trägt.

6. Verfahren zum Einstellen eines Lüftspiels (s1, s2) in einer Doppelkupplungsanordnung (20) gemäß einem der Ansprüche 1 bis 5, wobei das einer jeweiligen der Reibkupplungen (24, 26) zugeordnete Eingangsglied (28, 38) derart ausgebildet ist, dass es ein Gegenlager (92, 94) für die zugeordnete Reibkupplung (24, 26) bildet, mit den Schritten:
Fixieren eines der Eingangsglieder (90) an der Nabe (46) oder am Nabenmantel (48);
drehfestes Montieren der Kolben/Zylinderanordnungen an der Nabe (46) oder am Nabenmantel (48);
Einstellen eines gewünschten Lüftspiels (s1, s2) durch axiales Bewegen des Eingangsglieds (28, 38), welches der einzustellenden Reibkupplung (24, 26) zugeordnet ist;
Fixieren des axial bewegten Eingangsglieds (28, 38) an dem Eingangsglied (90), welches an der Nabe (46) oder dem Nabenmantel (48) fixiert ist, wenn das gewünschte Lüftspiel (s1, s2) eingestellt ist,
wobei die nachfolgenden Schritte in der angegebenen Reihenfolge durchgeführt werden:
Fixieren des dritten Eingangsglieds (90) an der Nabe (46) bzw. dem Nabenmantel (48);
Montieren der Kolben/Zylinderanordnung (60), die der außen liegenden Reibkupplung (24) zugeordnet ist, an der Nabe bzw. dem Nabenmantel;
Einbauen des zweiten Eingangsglieds (38) mit zugeordnetem Reibkupplungskörper;
Montieren der Kolben/Zylinderanordnung (62) an der Nabe bzw. dem Nabenmantel, die der innen liegenden Reibkupplung (26) zugeordnet ist;
wahlweises Einstellen des Lüftspiels (s1) der inneren Reibkupplung (26) durch axiales Verschieben des zweiten Eingangsglieds (28) relativ zum dritten Eingangsglied (90);
Fixieren des zweiten Eingangsglieds (38) am dritten Eingangsglied (90);
Einbauen des Ausgangsglieds (40) der inneren Reibkupplung (26);
Einbauen des Ausgangsglieds (30) der äußeren Reibkupplung (24) inkl. des Reibkupplungskörpers der äußeren Reibkupplung (24);
wahlweises Einstellen des Lüftspiels (s2) der äußeren Reibkupplung (24) durch axiales Verschieben des ersten Eingangsglieds (28) relativ zum dritten Eingangsglied (90); und
Fixieren des ersten Eingangglieds (28) am dritten Eingangsglied (90).

## Claims

1. A dual clutch transmission comprising a dual clutch system (20) which comprises an input shaft (16), first friction clutch (24), second friction clutch (26), two output shafts (32, 42) extending axially, which are connected to first and second partial transmissions (34, 44) of the dual clutch transmission, a hub (46), first piston/cylinder system (60) and second piston/cylinder system (62), wherein input members (28, 38, 90) of the friction clutches (24, 26) are coupled to the input shaft (16), wherein output members (30, 40) of the friction clutches (24, 26) respectively are connected to one of the output shafts (32, 42), wherein the friction clutches (24, 26) respectively can be actuated by means of one of the piston/cylinder systems (60, 62), and a hub jacket (48) being supported rotatably on the hub, wherein at least first, second and third input members (28, 38, 90) are provided, wherein the first input member (28) supports an outer member of the friction clutch (24) arranged at a radial outside, wherein the second input member (38) is coupled to the first input member (28) in a rotationally fixed manner and supports an inner member of the friction clutch (26) arranged at a radial inside, **characterized in that** the third input member (90) is coupled at an end thereof to the hub jacket (48) and is connected at the other end thereof to the second input member (38) at the radial inside and is connected in a frictionally fixed manner to the first input member (28) at the radial outside.

2. The dual clutch transmission of claim 1, wherein the friction clutches (24, 26) are multi-disc clutches.

3. The dual clutch transmission of claim 1 or 2, wherein the first and second input members (28, 38) respectively are formed such that they form a counter bearing (92, 94) when the friction clutch (24, 26) associated therewith is actuated.

4. The dual clutch transmission of one of the preceding claims, wherein the input member (28, 29), which is coupled to the input shaft (16), comprises a follower ring (17), an axial length of which is selected so that the follower ring (17) comprises at a radial outside thereof a shaft sealing (94) and a radial bearing (59; 96) and at a radial inside thereof an inner interlocking (17') for coupling to an outer interlocking of the input shaft (16).

5. The dual clutch transmission of one of the preceding claims, wherein the input member (28) of the outer friction clutch (24) comprises an outer interlocking for insertion into an inner interlocking of the input shaft (16), wherein the input shaft (16), on an outside thereof, carries a radial bearing (59; 96) and a shaft sealing (98).

6. A method for setting a ventilation clearance (s1, s2) in a dual clutch system (20) in accordance with one of the claims 1 to 5, wherein the input member (28, 38) being associated with a respective one of the friction clutches (24, 26) is formed such that the input member forms a counter bearing (92, 94) for the associated friction clutch (24, 26), the method comprising the steps of:
fixing one of the input members (90) to the hub (46) or the hub jacket (48);
mounting the piston/cylinder systems to the hub (46) or the hub jacket (48) in a rotationally fixed manner;
setting a desired ventilation clearance (s1, s2) by moving axially the input member (28, 38) which is associated with the to be set friction clutch (24, 26);
fixing the axially moved input member (28, 38) to the input member (90), which is fixed to the hub (46) or the hub jacket (48), when the desired ventilation clearance (s1, s2) is set,
wherein the following steps are performed in the given sequence:
fixing the third input member (90) to the hub (46) or the hub jacket (48);
mounting the piston/cylinder system (60) being associated with the friction clutch (24), which is arranged at the outside, to the hub or the hub jacket;
installing the second input member (38) together with an associated friction clutch body;
mounting the piston/cylinder system (62) to the hub or the hub jacket associated with the friction clutch (26) arranged at the inside;
selectively setting the ventilation clearance (s1) of the inner friction clutch (26) by axially moving the second input member (28) relative to the third input member (90);
fixing the second input member (38) to the third input member (90);
installing the output member (40) of the inner friction clutch (26);
installing the output member (30) of the outer friction clutch (24) together with the friction clutch body of the outer friction clutch (24);
selectively setting the ventilation clearance (s2) of the outer friction clutch (24) by axially moving the first input member (28) relative to the third input member (90); and
fixing the first input member (28) at the third input member (90).

## Revendications

1. Transmission à double embrayage présentant un agencement à double embrayage (20) comprenant un arbre d'entrée (16), un premier embrayage à friction (24), un deuxième embrayage à friction (26), deux arbres de sortie s'étendant axialement (32, 42), qui sont connectés à une première et une deuxième transmission partielle (34, 44) de la transmission à double embrayage, un moyeu fixé au boîtier (46), un premier agencement piston/cylindre (60) et un deuxième agencement piston/cylindre (62), des organes d'entrée (28, 38, 90) des embrayages à friction (24, 26) étant accouplés au niveau de l'arbre d'entrée (16), des organes de sortie (30, 40) des embrayages à friction (24, 26) étant à chaque fois connectés à l'un des arbres de sortie (32, 42), les embrayages à friction (24, 26) pouvant à chaque fois être actionnés au moyen de l'un des agencements piston/cylindre (60, 62), et comprenant une enveloppe de moyeu (48) montée de manière rotative sur le moyeu, au moins un premier, un deuxième et un troisième organe d'entrée (28, 38, 90) étant prévus, le premier organe d'entrée (28) portant un organe extérieur de l'embrayage à friction (24) situé radialement à l'extérieur, le deuxième organe d'entrée (38) étant accouplé de manière solidaire en rotation au premier organe d'entrée (28) et portant un organe intérieur de l'embrayage à friction (26) situé radialement à l'intérieur, **caractérisée en ce que** le troisième organe d'entrée (90) est accouplé au niveau de l'une de ses extrémités à l'enveloppe de moyeu (48) et, au niveau de son autre extrémité, est connecté de manière solidaire en rotation radicalement à l'intérieur au deuxième organe d'entrée (38) et radialement à l'extérieur au premier organe d'entrée (28).

2. Transmission à double embrayage selon la revendication 1, dans laquelle les embrayages à friction (24, 26) sont des embrayages à disques.

3. Transmission à double embrayage selon la revendication 1 ou 2, dans laquelle le premier et le deuxième organe d'entrée (28, 38) sont à chaque fois réalisés de telle sorte qu'ils forment un contre-palier (92, 94) lors de l'actionnement de leur embrayage à friction associé (24, 26).

4. Transmission à double embrayage selon l'une quelconque des revendications précédentes, dans laquelle l'organe d'entrée (28, 29), qui est accouplé à l'arbre d'entrée (16), présente une bague d'entraînement (17) dont la longueur axiale est choisie de telle sorte que la bague d'entraînement (17) présente, au niveau de son côté extérieur radial, un joint d'arbre (94) et un palier radial (59 ; 96), et, au niveau de son côté intérieur radial, une denture interne (17') pour l'accouplement à une denture externe de l'arbre d'entrée (16).

5. Transmission à double embrayage selon l'une quelconque des revendications précédentes, dans laquelle l'organe d'entrée (28) de l'embrayage à friction externe (24) présente une denture externe destinée à s'enfoncer dans une denture interne de l'arbre d'entrée (16), l'arbre d'entrée (16) portant à l'extérieur un palier radial (59 ; 96) et un joint d'arbre (98).

6. Procédé d'ajustement d'un jeu (s1, s2) dans un agencement à double embrayage (20) selon l'une quelconque des revendications 1 à 5, l'organe d'entrée (28, 38) associé à l'un respectif des embrayages à friction (24, 26) étant réalisé de telle sorte qu'il forme un contre-palier (92, 94) pour l'embrayage à friction associé (24, 26), comprenant les étapes suivantes :
fixation de l'un des organes d'entrée (90) au moyeu (46) ou à l'enveloppe de moyeu (48);
montage solidaire en rotation des agencements piston/cylindre sur le moyeu (46) ou sur l'enveloppe de moyeu (48) ;
ajustement d'un jeu souhaité (s1, s2) par déplacement axial de l'organe d'entrée (28, 38) qui est associé à l'embrayage à friction devant être ajusté (24, 26) ;
fixation de l'organe d'entrée déplacé axialement (28, 38) sur l'organe d'entrée (90) qui est fixé au moyeu (46) ou à l'enveloppe de moyeu (48) lorsque le jeu souhaité (s1, s2) est ajusté,
les étapes suivantes étant effectuées dans l'ordre indiqué :
fixation du troisième organe d'entrée (90) au moyeu (46) ou à l'enveloppe de moyeu (48);
montagne de l'agencement piston/cylindre (60) qui est associé à l'embrayage à friction situé à l'extérieur (24), sur le moyeu ou sur l'enveloppe de moyeu ;
installation du deuxième organe d'entrée (38) avec le d'embrayage à friction associé ;
montage de l'agencement piston/cylindre (62) sur le moyeu ou sur l'enveloppe de moyeu qui est associé à l'embrayage à friction situé à l'intérieur (26) ;
ajustement sélectif du jeu (s1) de l'embrayage à friction interne (26) par déplacement axial du deuxième organe d'entrée (28) par rapport au troisième organe d'entrée (90) ;
fixation du deuxième organe d'entrée (38) sur le troisième organe d'entrée (90) ;
installation de l'organe de sortie (40) de l'embrayage à friction interne (26) ;
installation de l'organe de sortie (30) de l'embrayage à friction externe (24), y compris du corps d'embrayage à friction de l'embrayage à friction externe (24) ;
ajustement sélectif du jeu (s2) de l'embrayage à friction externe (24) par déplacement axial du premier organe d'entrée (28) par rapport au troisième organe d'entrée (90) ; et
fixation du premier organe d'entrée (28) sur le troisième organe d'entrée (90).
